# EUROPEAN PATENT SPECIFICATION

(11) **EP 3 056 371 B1**
(45) Date of publication and mention of the grant of the patent: **08.11.2017**
(21) Application number: 15190156.8
(22) Date of filing: 16.10.2015
(51) Int. Cl.: B60K 17/28, A01B 71/06, F16D 1/108, F16D 3/16

(54) **SELF-ALIGNING DRIVESHAFT COUPLER**
SELBSTAUSRICHTENDER ANTRIEBSWELLENKOPPLER
COUPLEUR D'ARBRE À AUTO-ALIGNEMENT

(30) Priority: 12.02.2015 US 201514620953
(43) Date of publication of application: 17.08.2016
(73) Proprietor: Deere & Company, Moline, IL 61265 (US)
(72) Inventor: Knuth, Thomas, Thomson, GA Georgia 30824 (US)
(74) Representative: Dehnhardt, Florian Christopher

(56) References cited:
- EP-A1- 1 985 168
- EP-A1- 2 564 680
- DE-A1- 19 831 273
- US-A- 4 540 305

## Description

The present invention relates to a self-aligning driveshaft coupler.

Tractors may be equipped with a power take off (PTO) that transmits rotary power from an engine to an implement. The most common location for a PTO shaft is at the rear of the tractor, but some tractors have auxiliary PTO shafts at other locations. The direction of rotation, rotational speed, approximate location and exact dimensions of the PTO shaft are standardized to provide ability to interchange between power shafts on various implements made by different manufacturers. PTO shafts typically rotate at 540 rpm, 1000 rpm, 2100 rpm, or more than one speed.

To engage the PTO shaft to the power shaft or driveline of a rear mounted implement, the PTO shaft may have the ability to telescope. After the tractor is in proper position, the tractor operator may manually extend the telescoping PTO shaft and employ various coupler devices to couple the PTO shaft to the power shaft of the implement. This requires getting down off the seat or operator station of the tractor, and it can be quite time consuming to couple the PTO shaft to the power shaft of the implement manually. Coupling a PTO shaft to the driveline of an implement also can be difficult and dirty.

In the past, PTO shafts have been coupled to power shafts or drivelines of implements using splines to transmit rotational power, along with an additional keeper to secure the coupled parts and resist thrust loads. Often it is difficult to find the correct alignment for the female spline of the power shaft or driveline of the implement and the male spline of the PTO shaft of the tractor. Sometimes it is necessary for the operator to turn the power shaft or driveline of the implement until the correct alignment is found.

After correct alignment is accomplished, the operator still must hold back a locking feature at the implement until the power shaft or driveline is in place. It may be difficult to manipulate the locking feature or turn the power shaft or driveline to obtain correct alignment between the PTO shaft of the tractor and the power shaft or driveline of the implement.

Self-aligning driveshaft couplers are known from US 4 540 305 and DE 198 31 273 A1.

A need exists for an improved driveshaft coupler for coupling a PTO shaft of a tractor to a power shaft or driveline of an implement. There is a need for greater operator safety and ease of use when hooking up a PTO shaft of the tractor to the power shaft of an implement. There is a need for a self-aligning driveshaft coupler that may be used with standard PTO shafts on tractors, and with standard power shafts or drivelines on a variety of different implements. There also is a need for a self-aligning driveshaft coupler that does not require any external energy source such as electricity, hydraulics or pneumatics.

These and other objects are achieved by the present invention, wherein a self-aligning driveshaft coupler is provided. The self-aligning driveshaft coupler comprises a receiving clutch that is rotatable and has a neck with a spiral channel round the neck, wherein the spiral channel has a first end and a second end. A locking clutch assembly has a first ring shaped member and a second ring shaped member that rotate together. A locking pin extends radially from the second ring shaped member and into the first end of the spiral channel and pulling the locking clutch assembly toward the receiving clutch as the receiving clutch rotates until the locking pin is in the second end of the spiral channel following the spiral channel. A plurality of drive pins extend axially from the first ring shaped member and engage the receiving clutch when the locking pin is in the second end of the spiral channel.

The self-aligning driveshaft coupler provides greater operator safety and ease of use when hooking up a PTO shaft of the tractor to the power shaft of an implement. It may be used with standard PTO shafts on tractors, and with standard power shafts or drivelines on a variety of different implements. The self-aligning driveshaft coupler also does not require any external energy source such as electricity, hydraulics or pneumatics.

For a complete understanding of the objects, techniques, and structure of the invention reference should be made to the following detailed description and accompanying drawings, wherein same reference numerals designate identical parts or parts with equivalent function:
- Fig. 1: is a perspective view of a small and/or compact tractor with a self-aligning driveshaft coupler according to one embodiment of the invention,
- Fig. 2: is a perspective view of a self-aligning driveshaft coupler before connection according to one embodiment of the invention,
- Fig. 3: is a perspective view, partially in section, of a self-aligning driveshaft coupler during initial connection, according to one embodiment of the invention,
- Fig. 4: is a perspective view of a self-aligning driveshaft coupler during later connection, according to one embodiment of the invention, and
- Fig. 5: is a perspective view, partially in section, of a self-aligning driveshaft coupler after connection according to one embodiment of the invention.

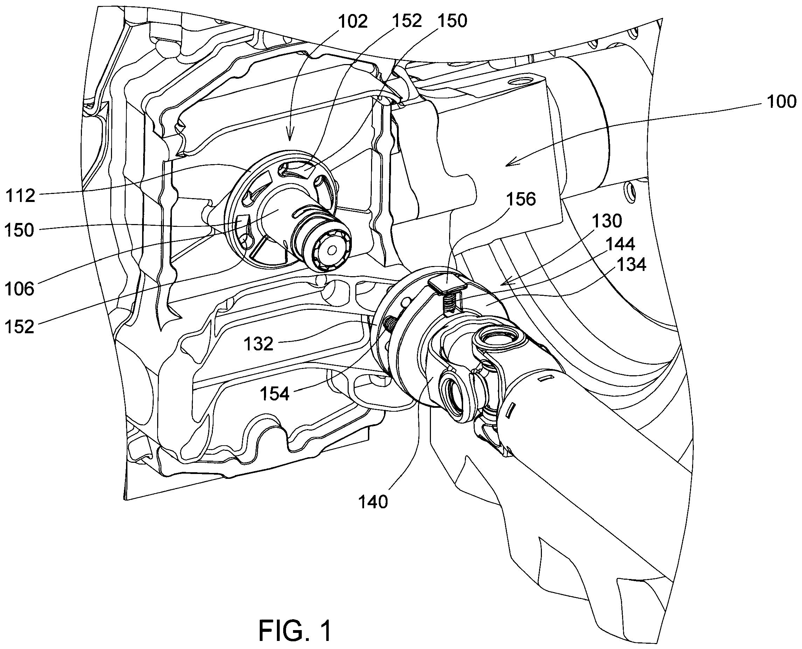

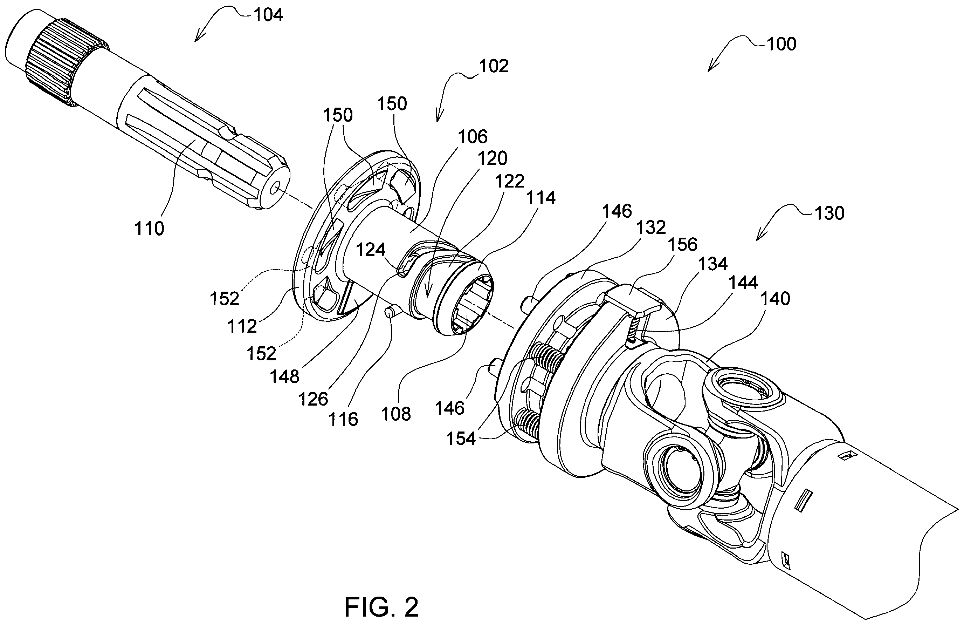

As shown in Figs. 1 to 5, a self-aligning driveshaft coupler 100 may be used to connect a PTO shaft 104 of a tractor to a power shaft or driveline of a rear mounted implement. The self-aligning driveshaft coupler 100 may include a receiving clutch 102 installed and mounted to the PTO shaft 104. The receiving clutch 102 may include a neck 106 with internal splines 108 that fit around and engage external splines 110 on the PTO shaft 104. The neck 106 may be integral with base or flange 112. An outer end 114 of the neck 106 may have a sloped lip that does not extend beyond the end of the PTO shaft 104. The receiving clutch 102 may be secured to the PTO shaft 104 using a pin 116 inserted through a radial hole in the neck 106 and a corresponding hole in the PTO shaft 104. Other similar devices may be used to secure the receiving clutch 102 axially to the PTO shaft 104.

In one embodiment, the self-aligning driveshaft coupler 100 may include a spiral channel 120 extending up to or about 360 degrees around the outer circumferential surface of neck 106. The spiral channel 120 may have a wide first end 122 near the outer end 114 of the neck 106, and may spiral around the neck's 106 outer circumference toward base or flange 112. The spiral channel 120 may taper down to a narrower second end 124, and may terminate between the outer end 114 and base or flange 112. At or near the second end 124 of the spiral channel 120, a radial slot 126 may be dimensioned to receive locking pin 128.

In one embodiment, the self-aligning driveshaft coupler 100 may include a locking clutch assembly 130 on the implement, including a first ring shaped member 132 and a second ring shaped member 134. The first and second ring shaped members 132 and 134 may be slidably engaged together with internal splines or teeth 136 and external splines or teeth 138 for rotation together, and also may be retained axially together by retainer ring 158. The second ring shaped member 134 may be secured to the power shaft or driveline of the implement, shown here as welded together or cast to form an integral part along with universal joint 140.

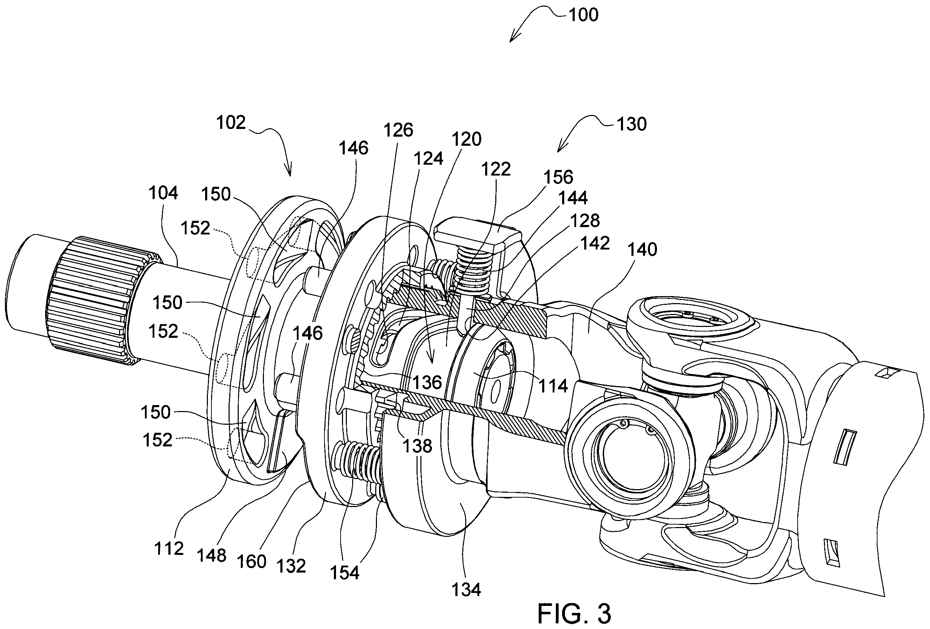

In one embodiment, the self-aligning driveshaft coupler 100 may include locking pin 128 slidably mounted in radial hole 142 in the second ring shaped member 134. The operator may start connecting the self-aligning driveshaft coupler 100 by picking up the locking clutch assembly 130 and sliding it axially onto receiving clutch 102. The operator may move the locking clutch assembly 130 far enough to slide locking pin 128 over the sloped lip at the outer end 114 of neck 106 and into the first end 122 of spiral channel 120, as shown in Fig. 3. Or the operator may retract locking pin 128 using lever or release button 156, until the locking pin 128 reaches spiral channel 120. Spring 144 may be mounted around the locking pin 128 and may urge the locking pin 128 radially into the first end 122 of the spiral channel 120. The operator then may operate the tractor to rotate PTO shaft 104. As the PTO shaft 104 rotates up to about 360 degrees or one complete revolution, spiral channel 120 pulls locking pin 128, and locking clutch assembly 130, further onto receiving clutch 102.

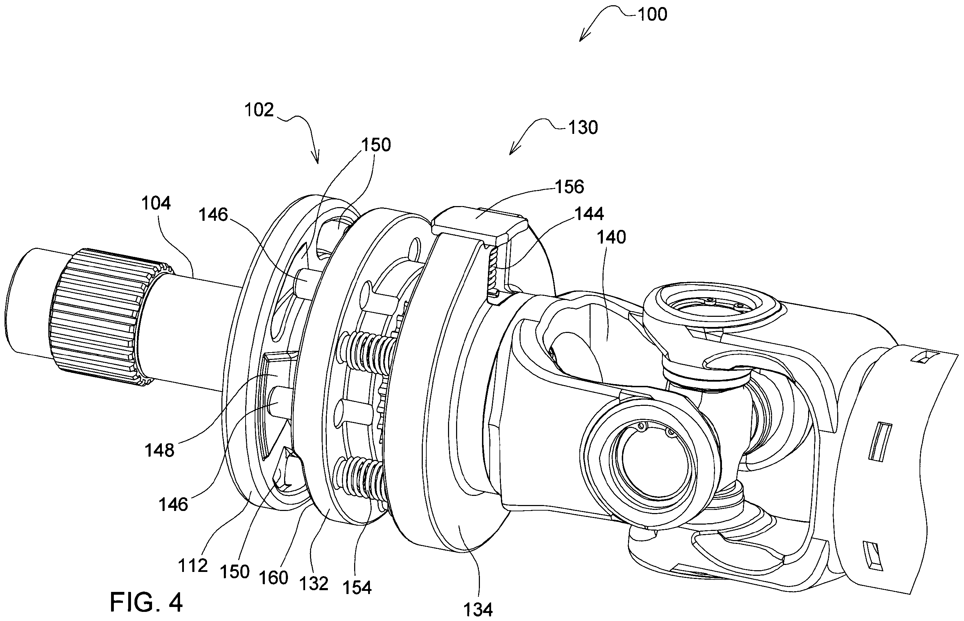

In one embodiment, the self-aligning driveshaft coupler 100 may include a plurality of drive pins 146 that project axially from first ring shaped member 132 toward receiving clutch 102. For example, the first ring shaped member 132 may have five drive pins 146. As shown in Fig. 3, while locking pin 128 is in the first end 122 of the spiral channel 120, the drive pins 146 may be spaced from the base or flange 112 of the receiving clutch 102. As the PTO shaft 104 rotates, the spiral channel 120 pulls the locking pin 128 and the locking clutch assembly 130 further onto the receiving clutch 102. The first and second ring shaped members 132 and 134 advance axially toward the receiving clutch 102. For part of a rotation (for example, about 60 degrees), the first ring shaped member 132 may stop advancing axially until drive pins 146 reach and contact base or flange 112. Optionally, as shown in Fig. 4, one of drive pins 146 may contact a raised portion 148 on the base or flange 112, while the other drive pins 146 may remain spaced from the base or flange 112.

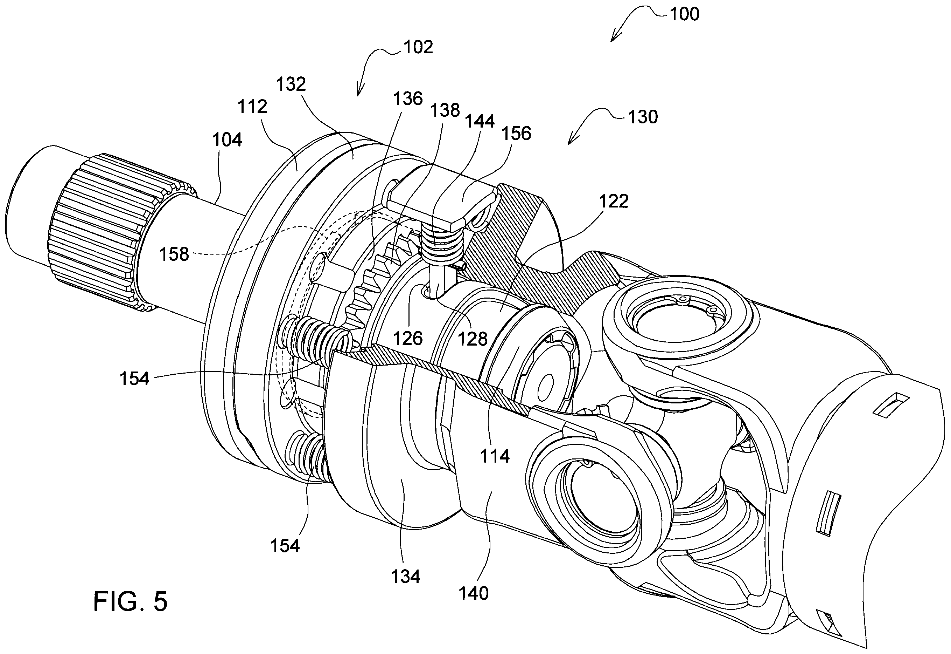

In one embodiment, the self-aligning driveshaft coupler 100 may include a plurality of ramps 150 with a receiving hole 152 at the bottom end of each ramp 150. As the PTO shaft 104 continues rotating the first ring shaped member 132 again advances axially so that all of the drive pins 146 may contact the base or flange 112 adjacent the start of each ramp 150. Each ramp 150 may be less than about 60 degrees around the base or flange 112. Springs 154 may be positioned between the first ring shaped member 132 and the second ring shaped member 134. As shown in Fig. 5, the springs 154 may urge the first ring shaped member 132 axially toward the receiving clutch 102, and drive pins 146 down the ramps 150 into the receiving holes 152. Optionally, the first ring shaped member 132 may have a mating surface 160 where raised portion 148 may fit.

In one embodiment, the self-aligning driveshaft coupler 100 may include locking pin 128 that may enter radial slot 126 at or nearly the same time as drive pins 146 enter receiving holes 152. Spring 144 may urge the locking pin 128 into radial slot 126. To disconnect the self-aligning driveshaft coupler 100, the operator may use release button 156 to pull the locking pin 128 out from the radial slot 126. Once the locking pin 128 is released, the locking clutch assembly 130 may slide axially off the receiving clutch 120.

## Claims

1. A self-aligning driveshaft coupler, **characterised by** comprising a receiving clutch (102) that is rotatable and has a neck (106) with a spiral channel (120) round the neck (106), the spiral channel (120) having a first end (122) and a second end (124); a locking clutch assembly (130) with a first ring shaped member (132) and a second ring shaped member (134) that rotate together; a locking pin (128) extending radially from the second ring shaped member (134) and into the first end (122) of the spiral channel (120) and pulling the locking clutch assembly (130) toward the receiving clutch (102) as the receiving clutch (102) rotates until the locking pin (128) is in the second end (124) of the spiral channel (129) following the spiral channel (120); and a plurality of drive pins (146) extending axially from the first ring shaped member (132) and engaging the receiving clutch (102) when the locking pin (128) is in the second end (124) of the spiral channel (120).

2. The self-aligning driveshaft coupler according to claim 1, **characterized by** further comprising a flange (112) on the receiving clutch (102) having a plurality of ramps (150) corresponding to the plurality of drive pins (146), and a receiving hole (152) at the bottom of each ramp (150) for holding one of the drive pins (146).

3. The self-aligning driveshaft coupler according to claim 2, **characterized by** further comprising a raised portion (148) on the flange (112) that is contacted by one of the drive pins (146) during rotation of the receiving clutch (102) before the drive pins (146) reach the receiving holes (152).

4. The self-aligning driveshaft coupler according to at least one of claims 1 to 3, **characterized by** further comprising a spring (144) urging the locking pin (128) into the spiral channel (120).

5. The self-aligning driveshaft coupler according to claim 4, **characterized by** further comprising a release button (156) connected to the locking pin (128) to pull the locking pin (128) out of the spiral channel (120).

6. The self-aligning driveshaft coupler according to at least one of claims 1 to 5, **characterized by** further comprising a radial slot (126) at the second end (124) of the spiral channel (120) dimensioned for receiving the locking pin (128).

7. The self-aligning driveshaft coupler according to at least one of claims 1 to 6, **characterized in that** the first end (122) of the spiral channel (120) is wider than the second end (124) of the spiral channel (120).

## Patentansprüche

1. Selbstausrichtendes Antriebswellenkopplungsstück, **dadurch gekennzeichnet, dass** es Folgendes umfasst: eine Aufnahmekupplung (102), die drehbar ist und einen Hals (106) mit einem spiralförmigen Kanal (120) um den Hals (106) aufweist, wobei der spiralförmige Kanal (120) ein erstes Ende (122) und ein zweites Ende (124) aufweist, eine verriegelnde Kupplungsanordnung (130) mit einem ersten ringförmigen Element (132) und einem zweiten ringförmigen Element (134), die sich zusammen drehen, einen Haltestift (128), der sich radial von dem zweiten ringförmigen Element (134) und in das erste Ende (122) des spiralförmigen Kanals (120) erstreckt und die verriegelnde Kupplungsanordnung (130) zu der Aufnahmekupplung (102) zieht, während sich die Aufnahmekupplung (102) dreht, bis sich der Haltestift (128) in dem zweiten Ende (124) des spiralförmigen Kanals (129) dem spiralförmigen Kanal (120) folgend befindet, und eine Vielzahl von Mitnehmerstiften (146), die sich axial von dem ersten ringförmigen Element (132) erstrecken und in die Aufnahmekupplung (102) eingreifen, wenn sich der Haltestift (128) in dem zweiten Ende (124) des spiralförmigen Kanals (120) befindet.

2. Selbstausrichtendes Antriebswellenkopplungsstück nach Anspruch 1, **dadurch gekennzeichnet, dass** es ferner einen Flansch (112) an der Aufnahmekupplung (102) umfasst, der eine Vielzahl von Rampen (150), die der Vielzahl von Mitnehmerstiften (146) entsprechen, und eine Aufnahmeöffnung (152) am Boden jeder Rampe (150) aufweist, um einen der Mitnehmerstifte (146) zu halten.

3. Selbstausrichtendes Antriebswellenkopplungsstück nach Anspruch 2, **dadurch gekennzeichnet, dass** es ferner einen erhabenen Abschnitt (148) an dem Flansch (112) umfasst, der während der Drehung der Aufnahmekupplung (102) von einem der Mitnehmerstifte (146) berührt wird, bevor die Mitnehmerstifte (146) die Aufnahmeöffnungen (152) erreichen.

4. Selbstausrichtendes Antriebswellenkopplungsstück nach wenigstens einem der Ansprüche 1 bis 3, **dadurch gekennzeichnet, dass** es ferner eine Feder (144) umfasst, die den Haltestift (128) in den spiralförmigen Kanal (120) zwingt.

5. Selbstausrichtendes Antriebswellenkopplungsstück nach Anspruch 4, **dadurch gekennzeichnet, dass** es ferner eine Freigabetaste (156) umfasst, die mit dem Haltestift (128) verbunden ist, um den Haltestift (128) aus dem spiralförmigen Kanal (120) zu ziehen.

6. Selbstausrichtendes Antriebswellenkopplungsstück nach wenigstens einem der Ansprüche 1 bis 5, **dadurch gekennzeichnet, dass** es ferner einen radialen Schlitz (126) an dem zweiten Ende (124) des spiralförmigen Kanals (120) umfasst, der zum Aufnehmen des Haltestifts (128) dimensioniert ist.

7. Selbstausrichtendes Antriebswellenkopplungsstück nach wenigstens einem der Ansprüche 1 bis 6, **dadurch gekennzeichnet, dass** das erste Ende (122) des spiralförmigen Kanals (120) breiter als das zweite Ende (124) des spiralförmigen Kanals (120) ist.

## Revendications

1. Coupleur d'arbre d'entraînement à auto-alignement, **caractérisé en ce qu'**il comprend un embrayage de réception (102) qui est rotatif et présente un col (106) avec un canal hélicoïdal (120) autour du col (106), le canal hélicoïdal (120) présentant une première extrémité (122) et une seconde extrémité (124); un ensemble d'embrayage de verrouillage (130) comprenant un premier élément en forme d'anneau (132) et un second élément en forme d'anneau (134) qui tournent ensemble; une broche de verrouillage (128) qui s'étend radialement à partir du second élément en forme d'anneau (134) et dans la première extrémité (122) du canal hélicoïdal (120) et qui tire l'ensemble d'embrayage de verrouillage (130) en direction de l'embrayage de réception (102) lorsque l'embrayage de réception (102) tourne jusqu'à ce que la broche de verrouillage (128) se trouve dans la seconde extrémité (124) du canal hélicoïdal (129) suivant le canal hélicoïdal (120); et une pluralité de broches d'entraînement (146) qui s'étendent axialement à partir du premier élément en forme d'anneau (132) et qui engagent l'embrayage de réception (102) lorsque la broche de verrouillage (128) se trouve dans la seconde extrémité (124) du canal hélicoïdal (120).

2. Coupleur d'arbre d'entraînement à auto-alignement selon la revendication 1, **caractérisé en ce qu'**il comprend en outre une bride (112) sur l'embrayage de réception (102) qui présente une pluralité de rampes (150) qui correspondent à la pluralité de broches d'entraînement (146), et un trou de réception (152) au pied de chaque rampe (150) pour maintenir une des broches d'entraînement (146).

3. Coupleur d'arbre d'entraînement à auto-alignement selon la revendication 2, **caractérisé en ce qu'**il comprend en outre une partie surélevée (148) sur la bride (112) qui est touchée par une des broches d'entraînement (146) pendant la rotation de l'embrayage de réception (102) avant que les broches d'entraînement (146) atteignent les trous de réception (152).

4. Coupleur d'arbre d'entraînement à auto-alignement selon au moins une des revendications 1 à 3, **caractérisé en ce qu'**il comprend en outre un ressort (144) qui pousse la broche de verrouillage (128) dans le canal hélicoïdal (120).

5. Coupleur d'arbre d'entraînement à auto-alignement selon la revendication 4, **caractérisé en ce qu'**il comprend en outre un bouton de déclenchement (156) qui est connecté à la broche de verrouillage (128) afin de tirer la broche de verrouillage (128) hors du canal hélicoïdal (120).

6. Coupleur d'arbre d'entraînement à auto-alignement selon au moins une des revendications 1 à 5, **caractérisé en ce qu'**il comporte en outre une fente radiale (126) à la seconde extrémité (124) du canal hélicoïdal (120) dimensionnée de manière à recevoir la broche de verrouillage (128).

7. Coupleur d'arbre d'entraînement à auto-alignement selon au moins une des revendications 1 à 6, **caractérisé en ce que** la première extrémité (122) du canal hélicoïdal (120) est plus large que la seconde extrémité (124) du canal hélicoïdal (120).
